# EUROPEAN PATENT SPECIFICATION

(11) **EP 2 909 998 B1**
(45) Date of publication and mention of the grant of the patent: **05.12.2018**
(21) Application number: 13780498.5
(22) Date of filing: 11.10.2013
(51) Int. Cl.: H04L 29/08

(54) **WEBPAGES WITH ONBOARD HARDWARE FUNCTIONS**
INTERNETSEITEN MIT INTEGRIERTEN HARDWAREFUNKTIONEN
PAGES INTERNET AYANT DES FONCTIONS MATÉRIELLES INCORPORÉES

(30) Priority: 17.10.2012 CN 201210395535; 10.10.2013 US 201314050841
(43) Date of publication of application: 26.08.2015
(73) Proprietor: Alibaba Group Holding Limited, Grand Cayman (KY)
(72) Inventor: QU, Zishen, Hangzhou 311121 (CN)
(74) Representative: McKinnon, Alistair James
(86) International application number: PCT/US2013/064485
(87) International publication number: WO 2014/062490

(56) References cited:
- GB-A- 2 331 600
- US-A1- 2012 220 263
- US-A1- 2012 226 970

## Description

### FIELD OF THE INVENTION

The present application relates to the field of webpage technology. In particular, it relates to a technique for generating and displaying webpages on different types of clients.

### BACKGROUND OF THE INVENTION

With the development of smart phones, more and more websites are introducing mobile phone clients. When users log onto a website with their mobile phones, they may do so with a browser or with a special client offered by the website such as an instant messaging client.

Functions for a camera, microphone, or other hardware equipment are often added to the phone client in order to facilitate user operation. For example, a mobile phone microblog client application may have real-time photo-taking and uploading functions, or an instant messaging client in a phone may have voice chatting functions. Such functions are typically omitted from webpages displayed in browsers because existing browser applications typically only permit functions such as data entry, file upload, etc., but do not permit the access of specific hardware on the device operating the browser application.

Typically, when users visit websites with browsers and clients, the server sends back the same webpage data. After a browser receives the webpage data, it can use the webpage information in the webpage data as a basis for generating the webpage for display. After a client receives the webpage data, the client program will add a hardware function into the webpage generated from the webpage information in the webpage data. That is, the client program will invoke the onboard hardware information to generate a hardware function and add it to the webpage, and ultimately display the webpage containing the hardware function. Therefore, although both browsers and clients may be used for logging in, their specific functions differ with respect to the webpage data that is sent back by the website server, even though the main content of the webpages is basically the same.

If one were to change the content displayed in webpages as in the method described above, usually it would be necessary to make modifications at the server end. Additionally, if one were to change hardware-related functions, it would be necessary to make modifications at the client end and then to upgrade the client. The server and the client would need to be modified separately, and the modified functions could not be experienced until after the client was upgraded. The client also could not be operated during upgrading. The upgrade process is complex and time- consuming for both developers and users.

US 2012/220263 describes accessing a webpage at a web server from a mobile application executing at a mobile device. A mobile application tag may be identified in the webpage, where the mobile application tag is independent of a device type of the mobile device.

US 2012/226970 describes a browser-executable software program for presenting a web page that provides the "look and feel" and functionality of a mobile application which can be automatically generated from a mobile application specification which identifies one or more predetermined content component types and one or more associated content sources. For each content component type, a copy of a corresponding code generation template is populated with a URL for each corresponding content source and executed to produce browser-executable program code. The browser-executable program code is then embedded into a populated copy of a navigation container code template to form a complete browser-executable software program, which is integrated into an HTML page.

GB 2331600 describes providing customised Internet content to a requesting client device using an intercepting agent based on the capabilities of the requesting client. The agent, typically at the web server to which the client request is directed intercepts a request made by a requesting client device for a file from a web server. The agent detects client device capability information about the requesting client device, such as display or memory capabilities. The request is directed to a client smart agent which attempts to identify the client using the HTTP header information. If that is unsuccessful, the client smart agent downloads a client snooper agent to the client to get the information about the client device.

The invention is defined in the claims.

### BRIEF DESCRIPTION OF THE DRAWINGS

Various embodiments of the invention are disclosed in the following detailed description and the accompanying drawings.
FIG. 1A is a block diagram illustrating an embodiment of an environment that supports webpages with onboard hardware functions.
FIG. 1B is a flowchart illustrating an embodiment of a process for sending webpage information.
FIG. 2 is a flowchart illustrating an embodiment of a process for generating and displaying a webpage.
FIG. 3 is a structural diagram of an embodiment of a device for sending webpage information.
FIG. 4 is a structural diagram of an embodiment of a device for generating webpages as described in an embodiment of the present application.
FIG. 5 illustrates user interface diagrams of example webpages displayed by a browser application and a non-browser client application.

### DETAILED DESCRIPTION

The invention can be implemented in numerous ways, including as a process; an apparatus; a system; a composition of matter; a computer program product embodied on a computer readable storage medium; and/or a processor, such as a processor configured to execute instructions stored on and/or provided by a memory coupled to the processor. In this specification, these implementations, or any other form that the invention may take, may be referred to as techniques. In general, the order of the steps of disclosed processes may be altered within the scope of the invention. Unless stated otherwise, a component such as a processor or a memory described as being configured to perform a task may be implemented as a general component that is temporarily configured to perform the task at a given time or a specific component that is manufactured to perform the task. As used herein, the term 'processor' refers to one or more devices, circuits, and/or processing cores configured to process data, such as computer program instructions.

A detailed description of one or more embodiments of the invention is provided below along with accompanying figures that illustrate the principles of the invention. The invention is described in connection with such embodiments, but the invention is not limited to any embodiment. The scope of the invention is limited only by the claims and the invention encompasses numerous alternatives, modifications and equivalents. Numerous specific details are set forth in the following description in order to provide a thorough understanding of the invention. These details are provided for the purpose of example and the invention may be practiced according to the claims without some or all of these specific details. For the purpose of clarity, technical material that is known in the technical fields related to the invention has not been described in detail so that the invention is not unnecessarily obscured.

The present application provides a technique for generating client type-specific webpages such that the server sends back different webpage data for browser and non-browser client applications. For example, webpage data for non-browser client applications may include certain functions that require onboard hardware such as uploading photos, chatting via a microphone, etc., while webpage data for a browser client may omit such functions or include different functions. Non-browser client applications may be regarded as containers for webpage data. The server decides the webpages and the content that are displayed. Therefore, both changes to the webpage display content and changes to the hardware functions may be carried out at the server end. The client need not be upgraded. The upgrading process is therefore greatly simplified. Users may access the website without giving consideration to function changes in the webpages or the non-browser client applications. The operations are easy to perform.

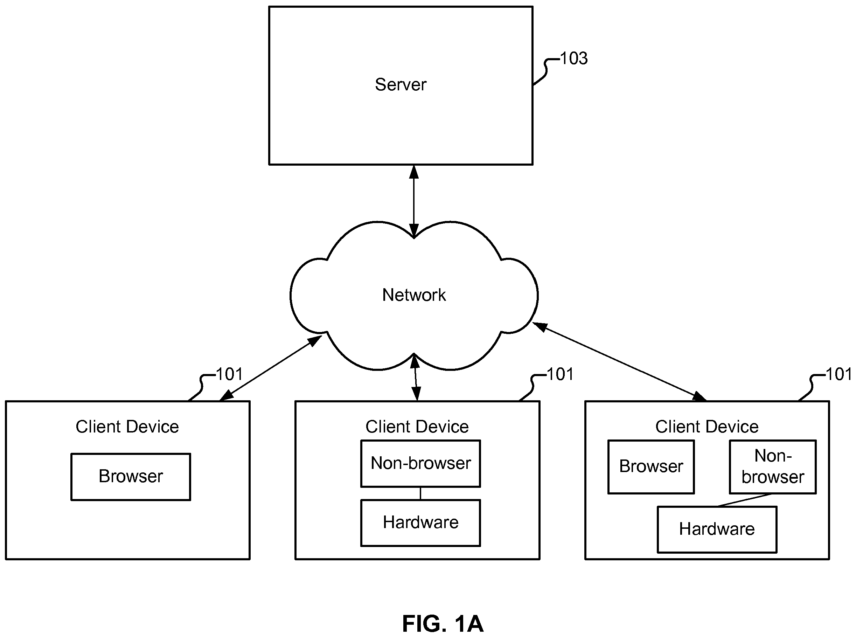

FIG. 1A is a block diagram illustrating an embodiment of an environment that supports webpages with onboard hardware functions. Client devices 101 can be personal computers, mobile terminals such as smartphones or tablets, or any other appropriate devices. The client devices communicate over a network (e.g., the Internet) with a server 103.

When a user accesses the website using a client device such as a smartphone or a tablet device, he or she may log on or otherwise access the website with a client application such as a browser (e.g., Safari®, Chrome®, Internet Explorer®, etc.) or a specialized client for that website (also referred to as a non-browser application). The client application engages in data exchanges with the website server. In some embodiments, the client device includes certain onboard hardware such as a camera or a microphone which may be accessed by a non-browser application. Thus, certain hardware functions are added to web pages to be displayed in the non-browser application to provide more ways for the user to interact with the website.

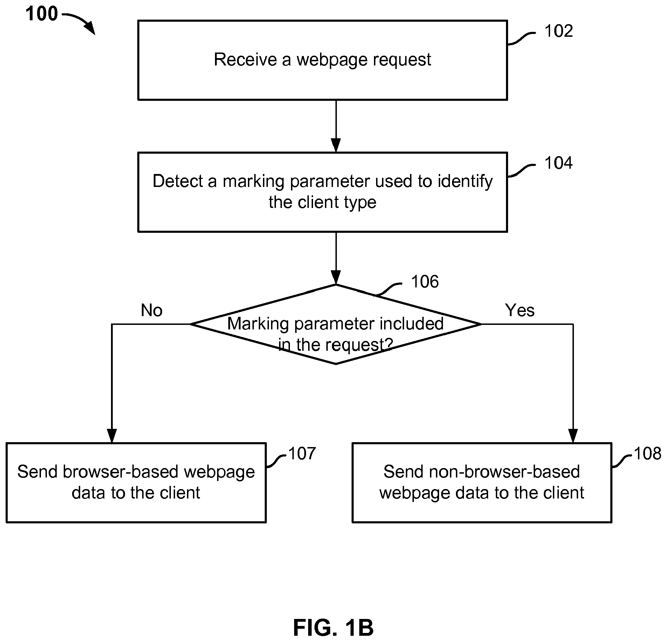

FIG. 1B is a flowchart illustrating an embodiment of a process for sending webpage information. Process 100 may be performed on a server system such as 103 of FIG. 1A.

At 102, a webpage request is received.

When the user logs in or otherwise initially accesses the website using the browser or non-browser client application operating on his client equipment, he first sends a webpage request, which is received by the server. The webpage request may include the requested webpage address, i.e., the Universal Resource Locator (URL) for the requested webpage. As will be discussed in greater detail below, the webpage request includes a marking that indicates the client type.

At 104, a marking parameter used to identify the client type for the client that sent the webpage request is detected. The marking parameter is used as a basis for assessing the client type that sent the webpage request.

As used herein, client types include browser applications (e.g., Safari®, Google Chrome®, Internet Explorer®, etc.) and non-browser client applications (e.g., Taobao's shopping application for iOS®, Taobao's shopping application for Android®, etc.). In some embodiments, the non-browser client applications may be hybrid applications. In some embodiments, different client type fields are set in different webpage requests using a marking parameter. In some embodiments, for webpage requests coming from a browser, there is no need to set the marking parameter in the webpage request. For webpage requests coming from a non-browser client application, a marking parameter is set in the webpage request to identify the source of the webpage request. For example, a user using a browser may enter http://www.taobao.com as the desired URL, and a corresponding webpage request sent by the browser includes the URL of http://www.taobao.com. A non-browser client application is configured to access the same URL but with additional parameters. A webpage request sent by a non-browser client application may include a URL of http://www.taobao.com/version=1&type=1, where the parameter of "type" and the meanings of its corresponding values are specified by the programmer of the client program (e.g., "type=1" indicates that the client program is a non-browser program). Other parameters and values may be used.

After the server receives the webpage requests, it will determine the source for the webpage request (i.e., the type of client application making the request), and send back different webpage data for different request sources.

At 106, the server first detects whether the webpage request includes a marking parameter. If the webpage request does not include a marking parameter, then it is determined that the webpage request came from a browser, and control is transferred to 107. If the webpage request does include a marking parameter, control is transferred to 108.

At 107, the webpage request is deemed to have been sent by a browser; therefore, browser-based webpage data is sent to the client. In some embodiments, the browser-based webpage data includes webpage information, i.e., the relevant data for the content displayed by the webpages sent back to the browser.

At 108, the webpage request is deemed to have been sent by a non-browser client application; therefore, non-browser webpage data based on the specific non-browser client application is sent to the client. In some embodiments, the non-browser webpage data includes webpage information and hardware function information to perform one or more onboard hardware functions.

The webpage information includes the webpage data whereby a browser or a non-browser client application downloads and forms an Internet webpage, such as the HTML code, JavaScript code, and/or CSS code specifying the page layout, font, color, text information, graphic information, etc., of a webpage. The hardware function information includes the code provided for execution by the client and is used to invoke onboard hardware functions, such as JavaScript code that invokes hardware API calls for taking a photo or video using an onboard camera, recording a voice-based comment using an onboard microphone, etc. Accordingly, the webpage displayed by a non-browser client application running on a client device with certain onboard hardware can include additional functions that make use of the onboard hardware.

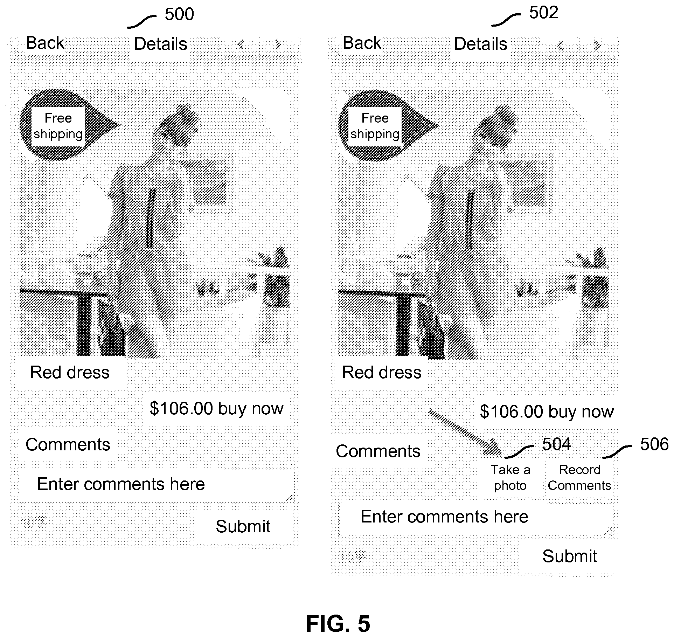

FIG. 5 illustrates user interface diagrams of example webpages displayed by a browser application and a non-browser client application. User interface diagrams 500 and 502 both display a product feedback page for the same product on the same website, displayed in different client applications. 500 is an example webpage displayed by a browser. 502 is an example webpage displayed by a non-browser client application. The pages are downloaded to the respective client applications using a process such as 100. As shown, 502 includes additional functions that rely on onboard hardware, specifically a "take a photo" function and a "record comments" function which are invoked by the user clicking on buttons 504 and 506, respectively.

To summarize the above, after the server of the present application receives a webpage request, it detects a marking parameter to identify the client type that sent the webpage request in the webpage request and assesses the client type that sent the webpage request. When it is determined that the client type is browser, the server sends back a first webpage data containing webpage information. When it is determined that the client type of the webpage request is a non-browser client application, the server sends back a second webpage data. The second webpage data includes webpage information and code for executing one or more designated onboard hardware functions (e.g., JavaScript code that invokes hardware API calls). In some embodiments, the webpage request client type is assessed from the server end. Different data for different client types (including webpage information and hardware functions) is sent by the server. Thus, non-browser client applications are regarded as containers of server-sent data. Therefore, both changes to the webpage display content and changes to the hardware functions may be carried out at the server end. The non-browsing client program does not need to be upgraded. All the user needs to do is to log in or otherwise access the server and is not required to perform additional changes to the client program. The upgrade process is streamlined and easy to perform.

In some embodiments, the webpage request optionally comprises platform information. Different mobile phones have different operating systems. Examples include Android®, iOS®, and Windows Phone 7 (WP7). Therefore, the client applications can be installed in different operating systems. Because the mechanisms of different operating systems differ, the ways in which they activate hardware functions also differ. Therefore, non-browser client applications installed in different operating systems need different data when loading hardware functions. For example, different Application Programming Interface (API) information is required to support hardware functions on different platforms. Therefore, the server needs to identify the kind of operating system on which the non-browser client application has been installed. In some embodiments, to facilitate the identification process, the webpage request further comprises platform information that is used to identify the operating system on which the non-browser client application is installed.

In some embodiments, after determining that the request came from a non-browser client, the process further comprises detecting the platform information so as to differentiate the platform environment (i.e., the operating system that supports the running of the client program) on which the client application operates. In some embodiments, additional parameters are configured by the client application (e.g., hard-coded, read from a configuration file or other location, etc.) and are included in the webpage request. For example, a request sent by an iOS device may include a URL of http://www.taobao.com/version=1&platform=ios&type=1, and a request sent by an Android-based client program may include a URL of http ://www.taobao.com/version=1&platform=Android&type=2.

In some embodiments, the marking parameter in the webpage request that identifies the client type sending the webpage request is used to determine whether the client type of the webpage request is a browser application or a non-browser client application. Next, the server determines the type of operating system on which the client program is installed. In some embodiments, the platform information parameter shown in the example above is used to differentiate the client source of the webpage request. That is, the platform information is used as a basis for assessing the platform (e.g., operating system) on which the client application runs, and platform-specific support information needed by the code to execute the onboard hardware functions is sent to the client application.

In various embodiments, the non-browser client applications execute on a number of different platforms such as Android®, iOS®, WP7®, etc.

When a client running on a platform loads hardware functions, it needs the server to send support information for that platform, such as API information for that platform, hardware limitations such as the maximum size of a photo, the maximum length of recording, whether data captured by the hardware can be uploaded to the server, etc.. The support information is platform-specific; in other words, different support information is required by different platforms. If the client is running on a platform that does not support the hardware functions which the client invokes, no additional support information needs to be sent.

Optionally, if the webpage request comes from a client program that runs on the first platform, then the second webpage data will further comprise the support information needed by the first platform to load hardware functions. The support information is for providing support for loading hardware functions. The specific support information varies according to different platforms, i.e., operating systems.

In some embodiments, the platforms that support hardware functions require platform data. For example, if the non-browser client application is developed through the PhoneGap tool, then to run the non-browser client application on an Android platform the PhoneGap JS library is loaded while loading the hardware functions. Other JavaScript code for supporting JavaScript on the local platform, such as an android.js file for the Android platform, or ios.js for the iOS platform, etc., may be needed and downloaded in some embodiments.

In some embodiments, the support information includes API information pertaining to the hardware functions, such as the function calls, parameters, returned values, etc. Accordingly, the client platforms can be differentiated by the request's specification of whether/what type of support information the server should send back, as well as actual specification of the operating system by the client. Many different platforms are possible and any appropriate technique for differentiating the specific platform can be used.

To summarize the above, the webpage requests described in the present application further comprise information that identifies the platform whereon the client program runs such that the server can differentiate the platforms where the client programs are located. Platform-specific support information needed by the code invoking the onboard hardware functions is determined and sent to the platforms. Therefore, the webpage data sent back by the server can meet the needs of various kinds of operating systems.

For purposes of illustration, the following discussions use camera functions and/or microphone functions as example onboard hardware functions. The type of hardware function information depends on the specific hardware available on the client device. Other hardware functions such as accelerometer functions, biosensor functions, etc. can also be used.

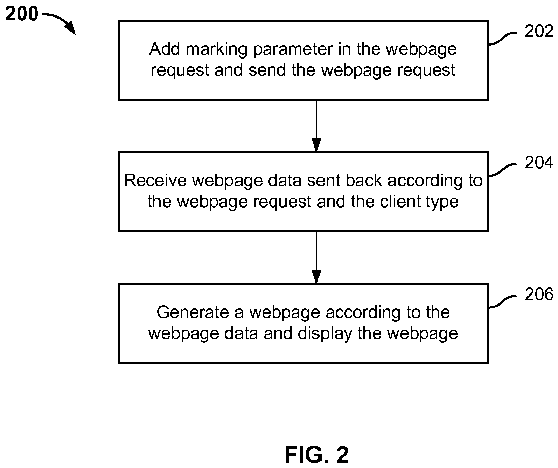

FIG. 2 is a flowchart illustrating an embodiment of a process for generating and displaying a webpage. Process 200 may be performed on a client device.

At 202, the client adds in the webpage request the marking parameter that identifies the client type that sent the webpage request as needed, and sends the webpage request.

When the user makes use of the client program to log onto the client website, the client will send a webpage request to request that a webpage be loaded. To enable the server to identify what type of client the webpage request is from, a marking parameter is added into the webpage request as appropriate. The presence of the marking parameter identifies the client as a non-browser client application. For example, the marking parameter of "platform" is included in the webpage request, and depending on the implementation of the client program, the value of the marking parameter can be set as "iOS," "Android," "WP7," etc.

At 204, the webpage data is received. The webpage data is sent back in response to the webpage request.

The client receives the client program-specific webpage data sent back by the server after identifying the client program sending the webpage request. When the client type is a non-browser client application, the webpage data includes hardware function information and webpage information (i.e., the content displayed by the webpage in the client).

The webpage information includes the webpage data supplied to the client for loading and forming the webpage (e.g., HTML document information that formats a webpage). The hardware function information includes the code provided for execution by the client and is used to invoke onboard hardware functions (e.g., a JavaScript API call such as hardware.useCamera()).

At 206, one or more webpages are generated according to the webpage data, and displayed.

When the client type is a non-browser client application, the client program can be regarded as a container for displaying webpages. The data carried by the container was sent by the server. Therefore, after the client receives the webpage data, it can generate webpages including the hardware functions according to the webpage data. For example, if the server detects that the client platform is Android®, then the webpage data returned includes data that specifically invokes JavaScript files that support Android's onboard hardware functions by including the following script in the webpage data returned: <script type="text/javascript" src=http://cdn.taobao.com/android/hardware.js/>. Additional support data such as the maximum pixel size for a photo, the maximum length for a recorded message, etc. are obtained from the server. The client application then displays the webpages using existing techniques.

In the prior art, because hardware functions in non-browser clients are implemented as client code, hardware function changes in client webpages cannot be implemented without first updating the client. In the present application, however, the relevant data for implementing hardware functions is provided by the server. Therefore, changes to hardware functions can be completed at the server end. The upgrade does not require upgrading the client, and the upgrading process is therefore transparent to the user.

To summarize the above, when a client requests webpages in the present application, it will add a marking parameter into the webpage request to indicate the client type of the webpage request. When the client type is a non-browser client application, the client application receives webpage data (including hardware function information) sent back by the server, generates webpages containing the onboard hardware functions, and displays them. When the client program is loading webpages in the present application, it can implement hardware function loading solely on the basis of the webpage data sent back by the server, by invoking existing APIs provided by the client device's platform. The client program can be regarded as a container for displaying webpages, making it very easy to operate the client program. Making changes in the webpage data and hardware functions does not require client application upgrades.

In some embodiments, prior to sending the webpage request, the client program further acquires information on the platform whereon the client program runs, where the platform information is used as a basis for assessing the platform on which the client program runs, and the platform serves as a basis for acquiring the support information needed by the code whereby the client program on the platform executes the onboard hardware functions.

In addition, the platform information is added into the webpage request. The platform information is the information on the operating system where the client program runs.

Because the client program can be installed on different operating systems, and different operating systems require different data when loading hardware functions, the client program also needs to acquire the platform information corresponding to the webpage request that it is sending. It then adds the platform information into the webpage request. The platform information serves to identify the operating system where the client program was loaded.

If the client source for the platform information is a platform that supports invocation of onboard hardware, then the webpage data further comprises platform support information. For example, JS libraries need to be loaded while the Android system is loading hardware functions, and JS library loading requires the support of associated code. Therefore, the webpage data further comprises the support information of the client platform. The support information is for supporting the loading of hardware functions, and the specific type of support information varies according to the different platforms, i.e., operating systems.

In some embodiments, using the webpage data as a basis for generating webpages containing the onboard hardware functions includes invoking a page rendering engine (such as Trident, Gecko, WebKit, Presto, etc.) to render webpage information and adding code for executing onboard hardware functions to the rendering process.

The process of generating webpages is also the process of webpage rendering. For example, the webpage information could be webpage HTML code, in which case the webpage rendering could be the execution of the HTML code from top to bottom. Picture, FLASH, and other such data are acquired from the server when needed for the webpage. In the rendering process, when code execution reaches a function requiring hardware, the code for executing onboard hardware functions is added, and then the code is executed. For example, to add a camera function, the function call of hardware.useCamera() is added. Then execution of the HTML code continues until execution of the HTML code ends, at which point the webpage containing the onboard hardware function is generated.

In the above process, the execution of the hardware function that is added includes two types: 1) Immediate execution -- for example, in loading contact information, the hardware function information, such as hardware function code, can be loaded directly. 2) Non-immediate execution -- for example, a hardware function is triggered by a button. In this case, a hardware interface can be configured in the webpage such that the interface connects to the hardware function information. After the webpage is displayed, and after the user clicks the button, the interface can be triggered and then the hardware function information is executed.

In the above process, the client in the present application can be developed using PhoneGap. PhoneGap, built with HTML, CSS and JavaScript, is a platform for quickly developing mobile cross-platform mobile applications. It enables developers to use the core functions of smart phones (including geographic positioning, accelerometer, contacts, voice and vibration, etc.) such as iPhone, Android, Palm, Symbian, WP7, Bada, and Blackberry. In addition, PhoneGap has an abundance of plug-ins, which makes it possible to expand the number of functions.

PhoneGap provides a kind of client development middleware, which provides an interface that uses front-end development technology to invoke onboard hardware functions. The WebView control provided by the SDK (Software Development Kit) in PhoneGap is based on WebKit (an open-source browser engine); the core can realize rendering and display of webpages.

In some embodiments, if the webpage data further comprises support information, then the hardware function-containing webpages generated according to the webpage data comprise invoking a page rendering engine to render webpage information and adding code and support information for executing location hardware functions to the rendering so as to generate webpages containing the onboard hardware functions.

The process of generating webpages is also the process of webpage rendering. For example, the webpage information could be webpage HTML code, in which case the webpage rendering could be the execution of the HTML code from top to bottom. Picture, FLASH, and other such data are acquired from the server when needed for the webpage. In the rendering process, when code execution reaches a function requiring hardware, the hardware function code needs support information during execution because of the hardware function loading. For example, in the Android operating system, JS library and other such information need to be called up during hardware loading. Therefore, it needs the support information sent back by the server. The appropriate JS library is invoked during hardware function loading in order to complete the loading of the hardware function information. Then the HTML code continues to be executed until execution of the HTML code ends, at which point the webpage containing the onboard hardware functions can be generated.

In actual processing, PhoneGap tools will configure different client programs for different operating systems. When different client programs invoke hardware functions, the technologies that they use will vary. Therefore, the needed data will also vary. For example, different support information and different interface configurations will be needed. Therefore, it is preferable for the server side to use marking parameters and platform information to perform detection and then to send back different webpage data according to the detection results.

The camera function information can generate camera-related functions, such as loading photographs in webpages, scanning, camera flash, and other such hardware functions. The microphone function information can generate microphone-related functions, such as recording and other such voice-gathering hardware functions.

Preferably, the hardware functions in webpages containing the onboard hardware functions are realized through a button, a link, or other interface devices that support event triggers. Many other implementations are possible.

In some embodiments, an onboard hardware function in the webpage is implemented using a button. That is, when the user clicks on a button on the webpage, the event triggers the activation of the appropriate hardware. Referring to FIG. 5 for an example, when button 504 ("take a photo") is clicked, the camera is activated and the API for using the camera to take a photo is invoked.

In some embodiments, the onboard hardware function is implemented using a link. Similar to buttons, when a link address is selected by the user, the webpage containing the link activates appropriate hardware and invokes appropriate hardware functions.

In some embodiments, the onboard hardware function is implemented using an event trigger. For example, an application in the webpage is executed by voice. When this application is selected, it will trigger the microphone to turn the microphone on.

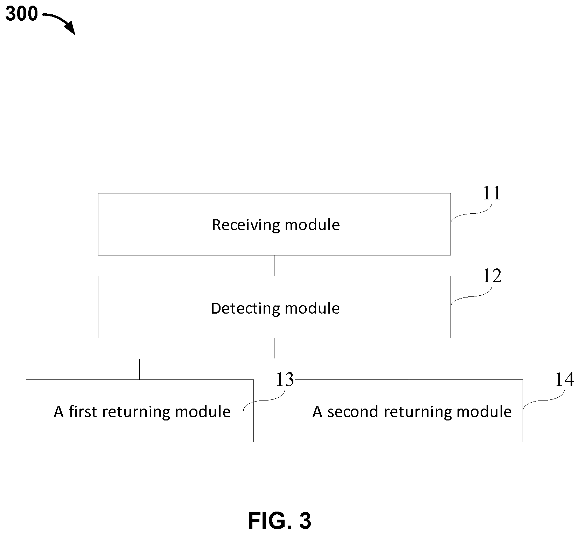

FIG. 3 is a structural diagram of an embodiment of a device for sending webpage information. Device 300 may be implemented using a server, and includes a receiving module 11, a detecting module 12, a first returning module 13, and a second returning module 14. Receiving module 11 is configured to receive webpage requests. Detecting module 12 is configured to detect the marking parameter that identifies the client type that sent the webpage request in the webpage request and assess the client type that sent the webpage request. A first returning module 13 is configured to send back, upon determining that the client type of the webpage request is browser, first webpage data based on the browser, the first webpage data comprising webpage information. A second returning module 14 is configured to send back, upon determining that the client type of the webpage request is a non-browser client application, a second-page data based on the client program, the second-page data containing code and webpage information for executing the designated onboard hardware functions.

In the present application, when the type of client that sent the webpage request is a non-browser client application, the webpage request further comprises information identifying the platform whereon the client program runs. The first returning module 13 is also configured to use the platform information as a basis for assessing the platform whereon the client program runs and, according to the platform, sending back the support information needed by the code whereby the client program on the platform executes the onboard hardware functions.

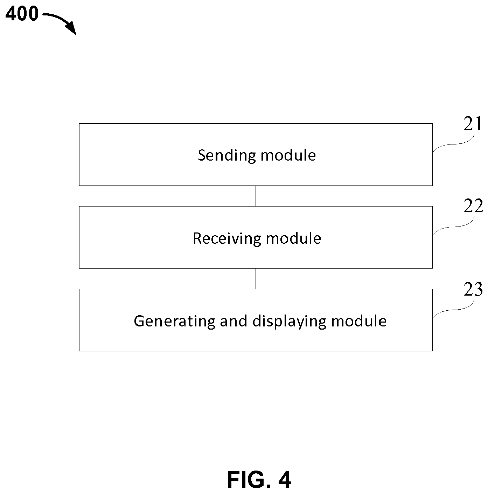

FIG. 4 is a structural diagram of an embodiment of a device for generating webpages as described in an embodiment of the present application.

Device 400 may be implemented as a client device executing a non-browser client application. Device 400 can implement process 200. Device 400 includes a sending module 21, a receiving module 22, and a generating and displaying module 23. Sending module 21 is configured to add into a webpage request the marking parameter that identifies the client type that sends the webpage request and sends the webpage request, the client type being non-browser client application. Receiving module 22 is configured to receive webpage data sent back according to the webpage request and marking parameter, wherein the webpage data contains code and webpage information for executing designated onboard hardware functions. Generating and displaying module 23 is configured to use the webpage data as a basis for generating webpages containing the onboard hardware functions and displaying the webpages.

In the example shown, sending module 21 is also configured to acquire information on the platform whereon the client program runs; the platform information can be used as a basis for assessing the platform on which the client program runs, as well as a basis for acquiring the support information needed by the code whereby the client program on the platform executes the onboard hardware functions.

In the example shown, the generating and displaying module 23 is specifically configured to invoke a page rendering engine to render webpage information and to add code for executing onboard hardware function information to the rendering process in order to generate webpages including hardware functions.

In the example shown, the onboard hardware functions comprise camera functions, microphone functions, and/or any other appropriate hardware functions.

In the example shown, the hardware functions in webpages containing the onboard hardware functions are realized through buttons, links, or event triggers.

Each of the embodiments contained in this description is described in a progressive manner, the explanation of each embodiment focuses on areas of difference from the other embodiments, and the descriptions thereof may be mutually referenced for portions of each embodiment that are identical or similar.

The modules described above can be implemented as software components executing on one or more processors, as hardware such as programmable logic devices and/or Application Specific Integrated Circuits designed to perform certain functions or a combination thereof. In some embodiments, the modules can be embodied by a form of software products which can be stored in a nonvolatile storage medium (such as optical disk, flash storage device, mobile hard disk, etc.), including a number of instructions for making a computer device (such as personal computers, servers, network equipment, etc.) implement the methods described in the embodiments of the present application. The modules may be implemented on a single device or distributed across multiple devices. The functions of the modules may be merged into one another or further split into multiple sub-modules.

The present invention is described with reference to flow charts and/or block diagrams based on methods, equipment (systems) and computer program products of the present invention. It should be understood that each process and/or block in the flow charts and/or block diagrams, and combinations of processes and/or blocks in the flow charts and/or block diagrams, can be achieved through computer program commands. One can provide these computer commands to a general-purpose computer, a specialized computer, an embedded processor or the processor of other programmable data processing equipment so as to give rise to a machine, with the result that the commands executed through the computer or processor of other programmable data processing equipment give rise to a device that is used to realize the functions designated by one or more processes in a flow chart and/or one or more blocks in a block diagram.

These computer program commands can also be stored on specially-operating computer-readable storage devices that can guide computers or other programmable data processing equipment, with the result that the commands stored on these computer-readable devices give rise to products that include command devices. These command devices realize the functions designated in one or more processes in a flow chart and/or one or more blocks in a block diagram.

These computer program commands can also be loaded onto a computer or other programmable data processing equipment, with the result that a series of operating steps are executed on a computer or other programmable equipment so as to give rise to computer processing. In this way, the commands executed on a computer or other programmable equipment provide steps for realizing the functions designated by one or more processes in a flow chart and/or one or more blocks in a block diagram.

A method and device for sending back webpages and a method and device for generating webpages, which are provided by the present invention, have been described in detail above. This document has employed specific embodiments to expound the principles and forms of implementation of the present invention. The above embodiment explanations are only meant to aid in comprehension of the methods of the present invention and of its core concepts. Moreover, a person with general skill in the art would, on the basis of the concepts of the present invention, be able to make modifications to specific forms of implementation and to the scope of applications. To summarize the above, the contents of this description should not be understood as limiting the present invention.

Although the foregoing embodiments have been described in some detail for purposes of clarity of understanding, the invention is not limited to the details provided. There are many alternative ways of implementing the invention. The disclosed embodiments are illustrative and not restrictive.

## Claims

1. A system for sending webpage data to a client application executing on a client device, comprising:
one or more processors configured to:
receive (102) a webpage request sent by the client application executing on the client device (101);
detect (104) a marking parameter in the webpage request;
determine, from among a plurality of client types and based at least in part on the marking parameter, a client type to which the client application corresponds; and
configuring webpage data and sending (107; 108) the webpage data to the client device (101) according to the particular client type of the client application, wherein configuring and sending the webpage data includes:
in the event that the client type is determined to be a browser client application, send (107) to the client application first webpage data comprising webpage information; and
in the event that the client type is determined to be a non-browser client application, send (108) to the client application second webpage data comprising webpage information and code to execute an onboard hardware function on the client device (101); and
one or more memories coupled to the one or more processors, configured to provide the one or more processors with instructions.

2. The system of Claim 1, wherein in the event that the client type is determined to be a non-browser client application, the one or more processors are further configured to use platform information included in the webpage request to identify a platform on which the client application executes.

3. The system of Claim 2, wherein the one or more processors are further configured to send support information required to execute the onboard hardware function on the platform.

4. The system of Claim 3, wherein the support information is platform-specific.

5. The system of Claim 1, wherein the onboard hardware function includes a camera function, a microphone function, or both.

6. The system of Claim 3, wherein the support information includes API information pertaining to the onboard hardware function.

7. A method for sending webpage data to a client application, comprising:
receiving (102) a webpage request sent by the client application;
detecting (104) a marking parameter in the webpage request;
determining (106), from among a plurality of client types and based at least in part on the marking parameter, a client type to which the client application corresponds; and
configuring webpage data and sending (107; 108) the webpage data to the client application according to the particular client type of the client application, wherein configuring and sending the webpage data includes:
in the event that the client type is determined to be a browser client application, sending to the client application first webpage data comprising webpage information; and
in the event that the client type is determined to be a non-browser client application, sending to the client application second webpage data comprising webpage information and code to execute an onboard hardware function.

8. A system for generating a webpage for display, comprising: one or more processors configured to:
generate a webpage request comprising a marking parameter that identifies, from among a plurality of client types, a client type to which a client application executing on the system corresponds, wherein the client type of the client application is a non-browser client application;
send the webpage request using the client application;
receive webpage data that is sent in response to the webpage request, wherein the webpage data includes webpage information and code used to execute a designated onboard hardware function on the system, and wherein the webpage data is configured according to the particular client type of the client application executing on the system; and
use the webpage data as a basis to generate the webpage that provides the onboard hardware function and that is displayed; and
one or more memories coupled to the one or more processors, configured to provide the one or more processors with instructions.

9. The system of Claim 8, wherein the one or more processors are further configured to:
acquire platform information identifying a platform on which the client application executes; and
based at least in part on the platform information, acquire support information needed by the code used to execute the designated onboard hardware function on the system.

10. The system of Claim 8, wherein to use the webpage data as the basis for generating the webpage comprises:
invoking a page rendering engine to render the webpage information; and
adding the code used to execute the onboard hardware function to the rendered webpage
information.

11. The system of Claim 10, wherein to use the webpage data as the basis for generating the webpage comprises:
adding support information for executing the onboard hardware function to the rendered webpage information.

12. The system of Claim 8, wherein the onboard hardware function includes a camera function, a microphone function, or both.

13. The system of Claim 8, wherein the onboard hardware function is invoked through a button, a link, or an event trigger associated with the webpage.

14. The system of Claim 8, wherein the support information includes API information pertaining to the onboard hardware function.

15. A method for generating a webpage for display, comprising:
generating a webpage request comprising a marking parameter that identifies, from among a plurality of client types, a client type to which a client application executing on a client device (101) corresponds, wherein the client type of the client application is a non-browser client application;
sending the webpage request using the client application;
receiving webpage data that is sent in response to the webpage request, wherein the webpage data includes webpage information and code used to execute a designated onboard hardware function, wherein the webpage data is configured according to the particular client type of the client application executing on the client device (101); and
using the webpage data as a basis to generate the webpage that provides the onboard hardware function on the client device (101) and that is displayed.

## Patentansprüche

1. System zum Senden von Webseitendaten zu einer auf einem Client-Gerät laufenden Client-Applikation, das Folgendes umfasst:
einen oder mehrere Prozessoren, konfiguriert zum:
Empfangen (102) einer Webseitenanforderung, gesendet von der auf dem Client-Gerät (101) laufenden Client-Applikation;
Erkennen (104) eines Markierungsparameters in der Webseitenanforderung;
Bestimmen, aus einer Mehrzahl von Client-Typen und wenigstens teilweise auf der Basis des Markierungsparameters, eines Client-Typs, dem die Client-Applikation entspricht; und
Konfigurieren von Webseitendaten und Senden (107; 108) der Webseitendaten zu dem Client-Gerät (101) gemäß dem bestimmten Client-Typ der Client-Applikation, wobei das Konfigurieren und Senden der Webseitendaten Folgendes beinhaltet:
Senden (107) zu der Client-Applikation, falls festgestellt wird, dass der Client-Typ eine Browser-Client-Applikation ist, von ersten Webseitendaten, die Webseiteninformationen beinhalten; und
Senden (108) zu der Client-Applikation, falls festgestellt wird, dass der Client-Typ eine Nicht-Browser-Client-Applikation ist, von zweiten Webseitendaten, die Webseiteninformationen und Code zum Ausführen einer Onboard-Hardware-Funktion auf dem Client-Gerät (101) umfassen; und
einen oder mehrere mit den ein oder mehreren Prozessoren gekoppelte Speicher, konfiguriert zum Versorgen der ein oder mehreren Prozessoren mit Befehlen.

2. System nach Anspruch 1, wobei die ein oder mehreren Prozessoren, falls festgestellt wird, dass der Client-Typ eine Nicht-Browser-Client-Applikation ist, ferner zum Benutzen von in der Webseitenanforderung enthaltenen Plattforminformationen konfiguriert sind, um eine Plattform zu identifizieren, auf der die Client-Applikation läuft.

3. System nach Anspruch 2, wobei die ein oder mehreren Prozessoren ferner zum Senden von Unterstützungsinformationen konfiguriert sind, die zum Ausführen der Onboard-Hardware-Funktion auf der Plattform benötigt werden.

4. System nach Anspruch 3, wobei die Unterstützungsinformationen plattformspezifisch sind.

5. System nach Anspruch 1, wobei die Onboard-Hardware-Funktion eine Kamerafunktion, eine Mikrofonfunktion oder beide beinhaltet.

6. System nach Anspruch 3, wobei die Unterstützungsinformationen API-Informationen enthalten, die sich auf die Onboard-Hardware-Funktion beziehen.

7. Verfahren zum Senden von Webseitendaten zu einer Client-Applikation, das Folgendes beinhaltet:
Empfangen (102) einer von der Client-Applikation gesendeten Webseitenanforderung;
Erkennen (104) eines Markierungsparameters in der Webseitenanforderung;
Bestimmen (106), aus einer Mehrzahl von Client-Typen und wenigstens teilweise auf der Basis des Markierungsparameters, eines Client-Typs, dem die Client-Applikation entspricht; und
Konfigurieren von Webseitendaten und Senden (107; 108) der Webseitendaten zu der Client-Applikation gemäß dem bestimmten Client-Typ der Client-Applikation, wobei das Konfigurieren und Senden der Webseitendaten Folgendes beinhaltet:
Senden zu der Client-Applikation, falls festgestellt wird, dass der Client-Typ als eine Browser-Client-Applikation ist, von ersten Webseitendaten, die Webseiteninformationen umfassen; und
Senden zu der Client-Applikation, falls festgestellt wird, dass der Client-Typ eine Nicht-Browser-Client-Applikation ist, von zweiten Webseitendaten, die Webseiteninformationen und Code zum Ausführen einer Onboard-Hardware-Funktion umfassen.

8. System zum Erzeugen einer Webseite zur Anzeige, das Folgendes umfasst:
einen oder mehrere Prozessoren, konfiguriert zum:
Erzeugen einer Webseitenanforderung, die einen Markierungsparameter umfasst, der aus einer Mehrzahl von Client-Typen einen Client-Typ identifiziert, dem eine auf dem System laufende Client-Applikation entspricht, wobei der Client-Typ der Client-Applikation eine Nicht-Browser-Client-Applikation ist;
Senden der Webseitenanforderung mittels der Client-Applikation;
Empfangen von als Reaktion auf die Webseitenanforderung gesendeten Webseitendaten, wobei die Webseitendaten Webseiteninformationen und Code beinhalten, der zum Ausführen einer designierten Onboard-Hardware-Funktion auf dem System benutzt wird, und wobei die Webseitendaten gemäß dem bestimmten Client-Typ der auf dem System laufenden Client-Applikation konfiguriert ist; und
Benutzen der Webseitendaten als eine Basis zum Erzeugen der Webseite, die die Onboard-Hardware-Funktion bereitstellt und angezeigt wird; und
einen oder mehrere mit den ein oder mehreren Prozessoren gekoppelte Speicher, konfiguriert zum Versorgen der ein oder mehreren Prozessoren mit Befehlen.

9. System nach Anspruch 8, wobei die ein oder mehreren Prozessoren ferner konfiguriert sind zum:
Erfassen von Plattforminformationen, die eine Plattform identifizieren, auf der die Client-Applikation läuft; und
Erfassen, wenigstens teilweise auf der Basis der Plattforminformationen, von Unterstützungsinformationen, die von dem Code benötigt werden, der zum Ausführen der designierten Onboard-Hardware-Funktion auf dem System benutzt wird.

10. System nach Anspruch 8, wobei die Benutzung der Webseitendaten als Basis zum Erzeugen der Webseite Folgendes beinhaltet:
Aufrufen einer Seitendarstellungsengine zum Darstellen der Webseiteninformationen; und
Hinzufügen des Code, der zum Ausführen der Onboard-Hardware-Funktion benutzt wird, zu den dargestellten Webseiteninformationen.

11. System nach Anspruch 10, wobei die Benutzung der Webseitendaten als Basis zum Erzeugen der Webseite Folgendes beinhaltet:
Hinzufügen von Unterstützungsinformationen zum Ausführen der Onboard-Hardware-Funktion zu den dargestellten Webseiteninformationen.

12. System nach Anspruch 8, wobei die Onboard-Hardware-Funktion eine Kamerafunktion, eine Mikrofonfunktion oder beide beinhaltet.

13. System nach Anspruch 8, wobei die Onboard-Hardware-Funktion durch eine Schaltfläche, eine Link oder einen mit der Webseite assoziierten Event-Trigger aufgerufen wird.

14. System nach Anspruch 8, wobei die Unterstützungsinformationen API-Informationen beinhalten, die sich auf die Onboard-Hardware-Funktion beziehen.

15. Verfahren zum Erzeugen einer Webseite zur Anzeige, das Folgendes beinhaltet:
Erzeugen einer Webseitenanforderung, die einen Markierungsparameter umfasst, der aus einer Mehrzahl von Client-Typen einen Client-Typ identifiziert, dem eine auf einem Client-Gerät (101) laufende Client-Applikation entspricht, wobei der Client-Typ der Client-Applikation eine Nicht-Browser-Client-Applikation ist;
Senden der Webseitenanforderung mittels der Client-Applikation;
Empfangen von Webseitendaten, die als Reaktion auf die Webseitenanforderung gesendet werden, wobei die Webseitendaten Webseiteninformationen und Code beinhalten, der zum Ausführen einer designierten Onboard-Hardware-Funktion benutzt wird, wobei die Webseitendaten gemäß dem bestimmten Client-Typ der auf dem Client-Gerät (101) laufenden Client-Applikation konfiguriert sind; und
Benutzen der Webseitendaten als Basis zum Erzeugen der Webseite, die die Onboard-Hardware-Funktion auf dem Client-Gerät (101) bereitstellt und angezeigt wird.

## Revendications

1. Système d'envoi de données de page Web vers une application client s'exécutant sur un dispositif client, comprenant :
un ou plusieurs processeurs configurés :
pour recevoir (102) une demande de page Web envoyée par l'application client s'exécutant sur le dispositif client (101) ;
pour détecter (104) un paramètre de marquage dans la demande de page Web ;
pour déterminer, parmi une pluralité de types de clients et sur la base au moins en partie du paramètre de marquage, un type de client auquel l'application client correspond ; et
pour configurer des données de page Web et envoyer (107 ; 108) les données de page Web vers le dispositif client (101) selon le type de client particulier de l'application client,
dans lequel une configuration et un envoi des données de page Web incluent :
dans le cas où le type de client est déterminé comme étant une application client de navigateur, un envoi (107) vers l'application client de premières données de page Web comprenant des informations de page Web ; et
dans le cas où le type de client est déterminé comme étant une application client autre que de navigateur, un envoi (108) vers l'application client de secondes données de page Web comprenant des informations et un code de page Web pour exécuter une fonction de matériel embarqué sur le dispositif client (101) ; et
une ou plusieurs mémoires couplées aux un ou plusieurs processeurs, configurées pour fournir aux un ou plusieurs processeurs des instructions.

2. Système selon la revendication 1, dans lequel dans le cas où le type de client est déterminé comme étant une application client autre que de navigateur, les un ou plusieurs processeurs sont en outre configurés pour utiliser des informations de plateforme incluses dans la demande de page Web pour identifier une plateforme sur laquelle l'application client s'exécute.

3. Système selon la revendication 2, dans lequel les un ou plusieurs processeurs sont en outre configurés pour envoyer des informations de prise en charge requises pour exécuter la fonction de matériel embarqué sur la plateforme.

4. Système selon la revendication 3, dans lequel les informations de prise en charge sont spécifiques à une plateforme.

5. Système selon la revendication 1, dans lequel la fonction de matériel embarqué inclut une fonction de caméra, une fonction de microphone, ou les deux.

6. Système selon la revendication 3, dans lequel les informations de prise en charge incluent des informations d'API concernant la fonction de matériel embarqué.

7. Procédé d'envoi de données de page Web vers une application client, comprenant :
une réception (102) d'une demande de page Web envoyée par l'application client ;
une détection (104) d'un paramètre de marquage dans la demande de page Web ;
une détermination (106), parmi une pluralité de types de clients et sur la base au moins en partie du paramètre de marquage, d'un type de client auquel l'application client correspond ; et
une configuration de données de page Web et un envoi (107 ; 108) des données de page Web vers l'application client selon le type de client particulier de l'application client, dans lequel une configuration et un envoi des données de page Web incluent :
dans le cas où le type de client est déterminé comme étant une application client de navigateur, un envoi vers l'application client de premières données de page Web comprenant des informations de page Web ; et
dans le cas où le type de client est déterminé comme étant une application client autre que de navigateur, un envoi vers l'application client de secondes données de page Web comprenant des informations et un code de page Web pour exécuter une fonction de matériel embarqué.

8. Système de génération d'une page Web destinée à être affichée, comprenant :
un ou plusieurs processeurs configurés pour :
générer une demande de page Web comprenant un paramètre de marquage qui identifie, parmi une pluralité de types de clients, un type de client auquel une application client s'exécutant sur le système correspond, dans lequel le type de client de l'application client est une application client autre que de navigateur ;
envoyer la demande de page Web en utilisant l'application client ;
recevoir des données de page Web qui sont envoyées en réponse à la demande de page Web, dans lequel les données de page Web incluent des informations et un code de page Web utilisés pour exécuter une fonction de matériel embarqué désignée sur le système, et dans lequel les données de page Web sont configurées selon le type de client particulier de l'application client s'exécutant sur le système ; et
utiliser des données de page Web comme base pour générer la page Web qui fournit la fonction de matériel embarqué et qui est affichée ; et
une ou plusieurs mémoires couplées aux un ou plusieurs processeurs, configurées pour fournir aux un ou plusieurs processeurs des instructions.

9. Système selon la revendication 8, dans lequel les un ou plusieurs processeurs sont en outre configurés :
pour acquérir des informations de plateforme identifiant une plateforme sur laquelle l'application client s'exécute ; et
sur la base au moins en partie des informations de plateforme, pour acquérir des informations de prise en charge nécessaires au code utilisé pour exécuter la fonction de matériel embarqué désignée sur le système.

10. Système selon la revendication 8, dans lequel une utilisation des données de page Web comme base d'une génération de la page Web comprend :
une invocation d'un moteur de rendu de page pour un rendu des informations de page Web ; et
un ajout du code utilisé pour exécuter la fonction de matériel embarqué aux informations de page Web rendue.

11. Système selon la revendication 10, dans lequel une utilisation des données de page Web comme base d'une génération de la page Web comprend :
un ajout d'informations de prise en charge pour une exécution de la fonction de matériel embarqué aux informations de page Web rendue.

12. Système selon la revendication 8, dans lequel la fonction de matériel embarqué inclut une fonction de caméra, une fonction de microphone, ou les deux.

13. Système selon la revendication 8, dans lequel la fonction de matériel embarqué est invoquée par l'intermédiaire d'un bouton, d'un lien, ou d'un déclencheur d'événement associé à la page Web.

14. Système selon la revendication 8, dans lequel les informations de prise en charge incluent des informations d'API concernant la fonction de matériel embarqué.

15. Procédé de génération d'une page Web destinée à être affichée, comprenant :
une génération d'une demande de page Web comprenant un paramètre de marquage qui identifie, parmi une pluralité de types de clients, un type de client auquel une application client s'exécutant sur un dispositif client (101) correspond, dans lequel le type de client de l'application client est une application client autre que de navigateur ;
un envoi de la demande de page Web en utilisant l'application client ;
une réception de données de page Web qui sont envoyées en réponse à la demande de page Web, dans lequel les données de page Web incluent des informations et un code de page Web utilisés pour exécuter une fonction de matériel embarqué désignée, dans lequel les données de page Web sont configurées selon le type de client particulier de l'application client s'exécutant sur le dispositif client (101) ; et
une utilisation des données de page Web comme base pour générer la page Web qui fournit la fonction de matériel embarqué sur le dispositif client (101) et qui est affichée.
